(19) Europäisches Patentamt
European Patent Office
Office européen des brevets

(11) **EP 3 262 746 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **16700561.0**

(22) Anmeldetag: **13.01.2016**

(51) Int Cl.:
***H02P 1/00*** *(2006.01)*

(86) Internationale Anmeldenummer:
**PCT/EP2016/050502**

(87) Internationale Veröffentlichungsnummer:
**WO 2016/134872 (01.09.2016 Gazette 2016/35)**

(54) **STEUEREINRICHTUNG FÜR EINE ASYNCHRONMASCHINE UND VERFAHREN ZUM BETREIBEN EINER ASYNCHRONMASCHINE**

CONTROL DEVICE FOR AN ASYNCHRONOUS MACHINE AND METHOD FOR OPERATING AN ASYNCHRONOUS MACHINE

DISPOSITIF DE COMMANDE POUR UNE MACHINE ASYNCHRONE ET PROCÉDÉ DE FONCTIONNEMENT D'UNE MACHINE ASYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2015 DE 102015203524**

(43) Veröffentlichungstag der Anmeldung:
**03.01.2018 Patentblatt 2018/01**

(73) Patentinhaber: **Robert Bosch GmbH**
**70442 Stuttgart (DE)**

(72) Erfinder: **HENNEN, Martin**
**52064 Aachen (DE)**

(56) Entgegenhaltungen:
• **GALLEGOS-LOPEZ G ET AL: "Current Control of Induction Machines in the Field-Weakened Region", IEEE TRANSACTIONS ON INDUSTRY APPLICATIONS, IEEE SERVICE CENTER, PISCATAWAY, NJ, US, Bd. 43, Nr. 4, 1. Juli 2007 (2007-07-01), Seiten 981-989, XP011187782, ISSN: 0093-9994, DOI: 10.1109/TIA.2007.900459**

**Beschreibung**

Die Erfindung betrifft eine Steuereinrichtung für eine Asynchronmaschine und ein Verfahren zum Betreiben einer Asynchronmaschine.

Stand der Technik

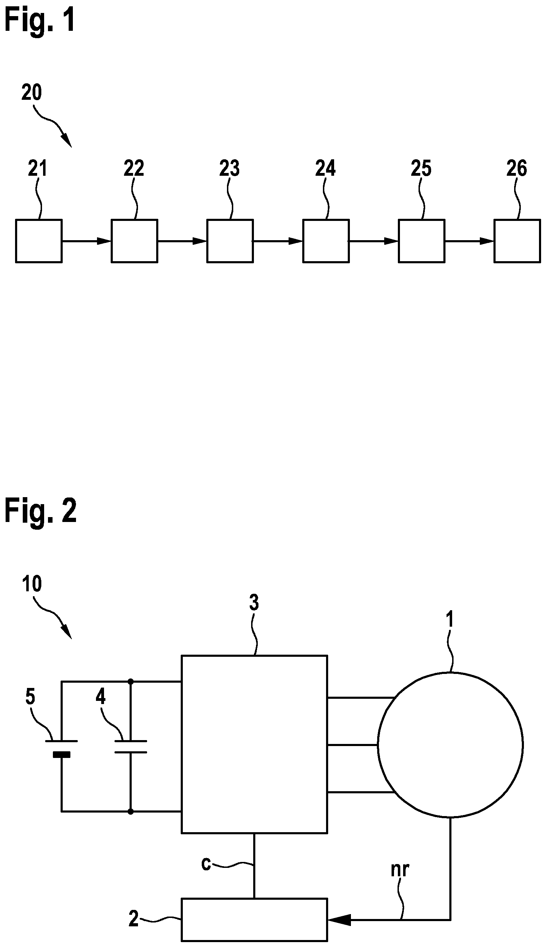

Die Druckschrift CH 477 124 A offenbart eine Anordnung zur Steuerung der Schlupffrequenz in einer Asynchronmaschine. Aus der Veröffentlichung: "Current Control of Induction Machines in the Field-Weakened Region", von GALLEGOS-LOPEZ G ET AL; IEEE TRANSACTIONS ON INDUSTRY APPLICATIONS, IEEE SERVICE CENTER, PISCATAWAY, NJ, US, vol. 43, no. 4, 1 July 2887 (2887-87-81), pages 981-989, XP811187782, ISSN: 8893-9994, DOI: 18.1189/TIA. 2887. 988459; abstract, figures 2a, 4, 5 ist eine Stromregelung für eine Asynchronmaschine bekannt.

Elektrische Antriebe mit Drehfeldmaschinen regen je nach Betriebspunkt, der durch Drehzahl und Drehmoment festgelegt ist, unterschiedliche Frequenzen in der Drehstrommaschine an, die sich in der Abgabe von Körper- oder Luftschall sowie in der Beeinflussung der Welligkeit des abgegebenen Drehmoments niederschlagen können. Insbesondere bei der Anregung von Eigenfrequenzen der Drehstrommaschine, beispielsweise über die Übertragung von Kräften im Luftspalt zwischen Ständer und Läufer, oder bei Eigenfrequenzen der angeflanschten Bauteile an der Antriebswelle der Maschine kommt es zu Resonanzen der Maschine und/oder der angekoppelten Bauteile, die den emittierten Luftschall des elektrischen Antriebs ungünstig beeinflussen können.

In bestimmten Drehzahlbereichen werden Eigenfrequenzen innerhalb der Komponenten des elektrischen Antriebs durch Oberwellen der Drehstrommaschine angeregt, und der Pegel des emittierten Luftschalls steigt bei diesen Eigenfrequenzen sprunghaft an. Die durch einen elektrischen Antrieb abgestrahlten Geräusche sollten im Betrieb jedoch auf ein Minimum reduziert werden.

Es besteht daher ein Bedarf an Lösungen für den Betrieb von Asynchronmaschinen, bei denen die Geräuschentwicklung über den gesamten Betriebsbereich hinweg minimal gehalten werden können, ohne das Design der Maschine und deren Leistungsdichte substantiell beschränken zu müssen.

Offenbarung der Erfindung

Die vorliegende Erfindung schafft gemäß einem ersten Aspekt ein Verfahren zum Betreiben einer Asynchronmaschine, mit den Schritten des Festlegens einer Arbeitspunkttrajektorie für die Asynchronmaschine für eine Vielzahl von Solldrehmomenten der Asynchronmaschine durch Berechnen von 2-Tupeln aus Längsstromwerten und Querstromwerten in einem synchron rotierenden Koordinatensystem der Asynchronmaschine, des Berechnens einer Schlupffrequenz der Asynchronmaschine für jedes der berechneten 2-Tupel aus Längsstromwerten und Querstromwerten, des Ermittelns einer aktuellen Läuferdrehzahl der Asynchronmaschine, des Berechnens einer Anregungsfrequenz der Asynchronmaschine durch Summation der berechneten Schlupffrequenz und der mit der Polpaarzahl der Asynchronmaschine gewichteten aktuellen Läuferdrehzahl sowie des Vergleichens der berechneten Anregungsfrequenz der Asynchronmaschine mit mindestens einem vorbestimmten Resonanzfrequenzwert der Asynchronmaschine. Dabei wird die festgelegte Arbeitspunkttrajektorie durch Änderung des Verhältnisses zwischen Längsstromwert und Querstromwert bei konstant gehaltenem Solldrehmoment für diejenigen der 2-Tupel korrigiert, bei denen die berechnete Anregungsfrequenz mit dem mindestens einen Resonanzfrequenzwert übereinstimmt.

Gemäß einem weiteren Aspekt schafft die vorliegende Erfindung eine Steuereinrichtung für eine Asynchronmaschine, mit einem Kontrollmodul, welches dazu ausgelegt ist, eine Arbeitspunkttrajektorie für die Asynchronmaschine für eine Vielzahl von Solldrehmomenten der Asynchronmaschine durch Berechnen von 2-Tupeln aus Längsstromwerten und Querstromwerten in einem synchron rotierenden Koordinatensystem der Asynchronmaschine festzulegen, eine Schlupffrequenz der Asynchronmaschine für jedes der berechneten 2-Tupel aus Längsstromwerten und Querstromwerten zu berechnen, sowie eine Anregungsfrequenz der Asynchronmaschine durch Summation der berechneten Schlupffrequenz und einer mit der Polpaarzahl der Asynchronmaschine gewichteten aktuellen Läuferdrehzahl zu berechnen. Die Steuereinrichtung umfasst weiterhin ein Vergleichsmodul, welches mit dem Kontrollmodul gekoppelt ist, und welches dazu ausgelegt ist, die durch das Kontrollmodul berechnete Anregungsfrequenz der Asynchronmaschine mit mindestens einem vorbestimmten Resonanzfrequenzwert der Asynchronmaschine zu vergleichen, und die durch das Kontrollmodul festgelegte Arbeitspunkttrajektorie durch Änderung des Verhältnisses zwischen Längsstromwert und Querstromwert bei konstant gehaltenem Solldrehmoment für diejenigen der 2-Tupel zu korrigieren, bei denen die berechnete Anregungsfrequenz mit dem mindestens einen Resonanzfrequenzwert übereinstimmt.

Gemäß einem weiteren Aspekt schafft die vorliegende Erfindung ein elektrisches Antriebssystem, mit einer Asynchronmaschine, einem Wechselrichter, welcher mit der Asynchronmaschine gekoppelt ist und dazu ausgelegt ist, eine mehrphasige Stromversorgung für die Asynchronmaschine bereitzustellen, sowie einer erfindungsgemäßen Steuereinrichtung, welche mit dem Wechselrichter gekoppelt ist, und welche dazu ausgelegt ist, den Wechselrichter gemäß dem erfindungsgemäßen Verfahren zum Betreiben der Asynchronmaschine anzusteuern.

Vorteile der Erfindung

Es ist eine Idee der vorliegenden Erfindung, mit Hilfe eines Regelalgorithmus die angeregten Frequenzen in einer Asynchronmaschine derart zu verschieben, dass Eigenfrequenzen und/oder Resonanzfrequenzen in dem elektrischen Antriebssystem nicht mehr angeregt werden. Dies kann dadurch gewährleistet werden, dass als zusätzliche Stellgröße für die Festlegung des Betriebspunktes bzw. Arbeitspunktes der Asynchronmaschine die Schlupffrequenz über das Verhältnis zwischen Längs- und Querstrom bei vorgegebenem Solldrehmoment variiert wird.

Das Auslegungskriterium, nach welchem die Anforderungen an die Akustik über das gesamte Frequenzspektrum und in nahezu allen Drehzahlbereichen erfüllt sein müssen, wird daher erheblich aufgelockert. Die Lautstärkeunterschiede im abgestrahlten Luftschall durch die Asynchronmaschine werden durch die Vermeidung der Anregung von Resonanzfrequenzen der Asynchronmaschine deutlich verringert.

Die Variation der Arbeitspunkttrajektorie geht zwar zu Lasten des Wirkungsgrades der Asynchronmaschine, allerdings ist es nicht notwendig, den Arbeitspunkt dauerhaft von dem unter Wirkungsgradaspekten optimalen Arbeitspunkt der Asynchronmaschine weg zu korrigieren. Mit der erfindungsgemäßen Vorgehensweise wird somit ein zusätzlicher Freiheitsgrad in der Ansteuerung der Asynchronmaschine gewonnen, der in Lastpunkten, in denen unerwünschte Eigenfrequenzen des Antriebssystems angeregt werden würden, einen dynamischen und temporären Regelmechanismus zur Verhinderung der Anregung ebendieser Eigenfrequenzen ermöglicht.

Gemäß einer Ausführungsform des erfindungsgemäßen Verfahrens kann das Festlegen der Arbeitspunkttrajektorie ein Minimieren des durch vektorielles Addieren des Längsstroms und des Querstroms erhaltenen Phasenstroms für jedes der Vielzahl von Solldrehmomenten der Asynchronmaschine umfassen.

Gemäß einer weiteren Ausführungsform des erfindungsgemäßen Verfahrens kann der mindestens eine vorbestimmte Resonanzfrequenzwert der Asynchronmaschine eine Eigenfrequenz in einem an die Asynchronmaschine angeschlossenen Getriebe, eine durch Luftspaltkräfte in der Asynchronmaschine angeregte Resonanzfrequenz und/oder deren Harmonische umfassen.

Dabei können in einer weiteren Ausführungsform die vorbestimmten Resonanzfrequenzwerte der Asynchronmaschine durch drehzahlabhängige Luftschallmessungen festgelegt werden.

Gemäß einer weiteren Ausführungsform des erfindungsgemäßen Verfahrens kann die Änderung des Verhältnisses zwischen Längsstromwert und Querstromwert eine Erhöhung des durch vektorielles Addieren des Längsstroms und des Querstroms erhaltenen Phasenstroms bei konstant gehaltenen Solldrehmoment umfassen.

Gemäß einer Ausführungsform der erfindungsgemäßen Steuereinrichtung kann die Steuereinrichtung weiterhin ein Drehzahlerfassungsmodul umfassen, welches mit dem Kontrollmodul gekoppelt ist, und welches dazu ausgelegt ist, die aktuelle Läuferdrehzahl der Asynchronmaschine zu erfassen.

Gemäß einer weiteren Ausführungsform der erfindungsgemäßen Steuereinrichtung kann die Steuereinrichtung weiterhin einen Referenzwertspeicher umfassen, welcher mit dem Vergleichsmodul gekoppelt ist, und welcher dazu ausgelegt ist, vorbestimmte Resonanzfrequenzwerte der Asynchronmaschine zu speichern.

Gemäß einer weiteren Ausführungsform der erfindungsgemäßen Steuereinrichtung können die vorbestimmten Resonanzfrequenzwerte eine Eigenfrequenz in einem an die Asynchronmaschine angeschlossenen Getriebe, eine durch Luftspaltkräfte in der Asynchronmaschine angeregte Resonanzfrequenz und/oder deren Harmonische umfassen.

Gemäß einer weiteren Ausführungsform der erfindungsgemäßen Steuereinrichtung kann das Kontrollmodul dazu ausgelegt sein, die Arbeitspunkttrajektorie für die Asynchronmaschine durch Minimieren des durch vektorielles Addieren des Längsstroms und des Querstroms erhaltenen Phasenstroms für jedes der Vielzahl von Solldrehmomenten der Asynchronmaschine festzulegen.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Fig. 1 eine schematische Darstellung eines Verfahrens zum Ansteuern einer Asynchronmaschine gemäß einer Ausführungsform der Erfindung;

Fig. 2 eine schematische Darstellung eines elektrischen Antriebssystems mit einer Asynchronmaschine gemäß einer weiteren Ausführungsform der Erfindung; und

Fig. 3 eine schematische Darstellung einer Steuereinrichtung für eine Asynchronmaschine gemäß einer weiteren Ausführungsform der Erfindung.

Detaillierte Beschreibung von Ausführungsformen der Erfindung

Im motorischen Betrieb einer Asynchronmaschine besteht eine Differenz zwischen der Drehzahl ns des Ständers und der tatsächlichen Drehzahl nr, d.h. der Ist-Drehzahl des Läufers, so dass die Ist-Drehzahl des Läufers geringer als die Drehzahl des Ständers ist. Die Differenz wird auch als Schlupf bezeichnet - die korrespondierende Schlupffrequenz fs ist somit zu der von der Polpaarzahl p der Asynchronmaschine abhängigen Läuferfrequenz fr = p nr hinzuzurechnen, um die Ständerfrequenz fst zu berechnen:

$$fst = p \cdot nr + fs$$

Im feldorientierten Regelungsbetrieb einer Asynchronmaschine, in dem die Ströme durch den Ständer der Asynchronmaschine gemäß einem feldorientierten Koordinatensystem mit einer sogenannten Längsachse d und einer orthogonal zu der Längsachse stehenden Querachse q geregelt werden, liegt die d-Achse demnach stets in Richtung des Raumzeigers des Läuferflusses. Der Raumzeiger des Ständerstroms teilt sich daher in dem feldorientierten Koordinatensystem in einen Längsstromanteil Id sowie einen Querstromanteil Iq auf.

Die Schlupffrequenz fs ist nicht im gesamten Betriebsbereich der Asynchronmaschine konstant, sondern proportional von einem Schlupffaktor ks abhängig, der wiederum proportional zur Längskomponente des Ständerstroms (dem Längsstromanteil Id) und zur Querkomponente des Ständerstroms (dem Querstromanteil Iq) ist. Bei der feldorientierten Regelung kann zur Optimierung des Wirkungsgrades das Verhältnis zwischen Längskomponente des Ständerstroms und Querkomponente des Ständerstroms so eingestellt werden, dass sich bei konstantem Solldrehmoment ein minimaler Phasenstrom ergibt.

Der Phasenstrom hat dabei einen Betrag, der sich aus dem Betrag der vektoriellen Summe aus Längskomponente und Querkomponente des Ständerstroms errechnet. Somit ergibt sich für jedes Solldrehmoment und jede Läuferdrehzahl ein Arbeitspunkt maximalen Drehmoments pro Phasenstrom ("maximum torque per phase current", MTPC). Diese Arbeitspunkte ergeben in Abhängigkeit des Solldrehmoments und der Läuferdrehzahl eine Arbeitspunkttrajektorie, nach der der Betrieb der Asynchronmaschine geregelt werden kann.

Durch Transformation der Längskomponente und Querkomponente des Ständerstroms aus dem feldorientierten Koordinatensystem in ein ständerfestes Koordinatensystem der Asynchronmaschine ergeben sich für die gewünschten Arbeitspunkte Ansteuersignale für einen die Asynchronmaschine speisenden n-phasigen, beispielsweise 3-phasigen Wechselrichter.

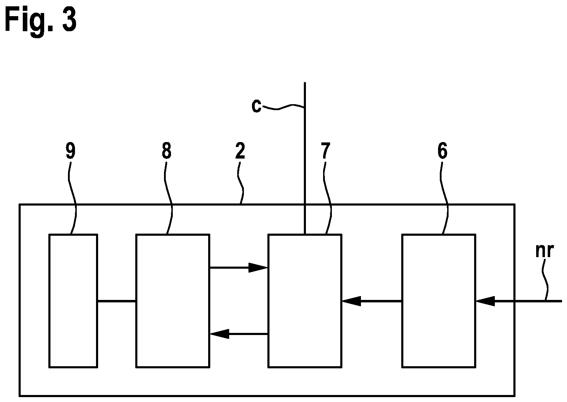

Fig. 1 zeigt eine schematische Darstellung eines Verfahrens 20 zum Ansteuern einer Asynchronmaschine. Das Verfahren 20 kann beispielsweise in einer Steuereinrichtung für einen die Asynchronmaschine speisenden Wechselrichter implementiert werden, zum Beispiel in der weiter unten im Zusammenhang mit Fig. 3 erläuterten Steuereinrichtung 2 für das elektrische Antriebssystem 10 der Fig. 2.

Zunächst wird einem ersten Schritt 21 eine Arbeitspunkttrajektorie für die Asynchronmaschine für eine Vielzahl von Solldrehmomenten der Asynchronmaschine festgelegt. Dies erfolgt durch das Berechnen von 2-Tupeln aus Längsstromwerten und Querstromwerten in einem synchron rotierenden Koordinatensystem der Asynchronmaschine. Die 2-Tupel können beispielsweise unter Berücksichtigung eines optimalen Wirkungsgrades der Asynchronmaschine festgelegt werden, in der Längsstrom und der Querstrom vektoriell addiert werden und der Betrag des daraus resultierenden Phasenstroms minimiert wird. Dadurch kann für jedes der Vielzahl von Solldrehmomenten der Asynchronmaschine ein einem jeweiligen Arbeitspunkt zugeordnetes 2-Tupel festgelegt werden, die zusammen die Arbeitspunkttrajektorie bilden.

Für jedes der berechneten 2-Tupel aus Längsstromwerten und Querstromwerten wird dann in Schritt 22 die Schlupffrequenz der Asynchronmaschine berechnet. Generell gilt, dass bei einer Erhöhung des Verhältnisses zwischen Längsstromwert und entsprechendem Querstromwert (bei gleichbleibendem Solldrehmoment) die Schlupffrequenz sinkt. Zum Beispiel kann für ein Solldrehmoment von 60 Nm einer beispielhaften Asynchronmaschine, die mit einem Längsstromwert von 40 A und einem Querstromwert von 450 A betrieben wird, die Schlupffrequenz etwa 18 Hz betragen. Demgegenüber kann die Schlupffrequenz auf unter 3 Hz sinken, wenn der Längsstromwert auf 200 A erhöht und der Querstromwert auf 189 A reduziert wird.

Wie oben angegeben, hat die Schlupffrequenz einen Einfluss auf die Frequenz der auf die Asynchronmaschine übertragenen Anregungen. Um die Frequenz der tatsächlich übertragenen Anregungen auf die Asynchronmaschine zu berechnen, ist noch die Kenntnis über die Polpaarzahl der Asynchronmaschine sowie die aktuelle Läuferdrehzahl erforderlich. In einem Schritt 23 des Verfahrens 20 kann diese aktuelle Läuferdrehzahl der Asynchronmaschine ermittelt werden, beispielsweise über einen Drehzahlsensor, einen Inkrementalgeber oder ein geeignetes geberloses Messverfahren. Dann kann in Schritt 24 eine Anregungsfrequenz der Asynchronmaschine durch Summation der berechneten Schlupffrequenz und der mit der Polpaarzahl der Asynchronmaschine gewichteten aktuellen Läuferdrehzahl berechnet werden.

Kennt man nun alle angeregten Grund- und Oberwellen der Asynchronmaschine und der an die Welle der Asynchronmaschine angeschlossenen Antriebskomponenten, lässt sich vorhersagen, ob und in welchem Umfang Eigenfrequenzen des elektrischen Antriebssystems bei der berechneten Anregungsfrequenz angeregt werden. Die Resonanzfrequenzwerte der Asynchronmaschine können beispielsweise Eigenfrequenzen in einem an die Asynchronmaschine angeschlossenen Getriebe, durch Luftspaltkräfte in der Asynchronmaschine angeregte Resonanzfrequenz und/oder deren Harmonische umfassen. Solche Resonanzfrequenzwerte der Asynchronmaschine können zum Beispiel durch drehzahlabhängige Luftschallmessungen ausgemessen werden.

Um die Anregung speziell dieser Eigenfrequenzen vermeiden zu können, wird in Schritt 25 des Verfahrens 20 die berechnete Anregungsfrequenz der Asynchronmaschine mit mindestens einem vorbestimmten Resonanzfrequenzwert der Asynchronmaschine verglichen. Wenn sich herausstellt, dass die berechnete Anregungsfrequenz mit dem mindestens einen Resonanzfrequenzwert übereinstimmt, wird für diese Anregungsfrequenz in einem Schritt 26 die festgelegte Arbeitspunkttrajektorie durch Änderung des Verhältnisses zwischen Längsstromwert und Querstromwert korrigiert. Dabei wird das Solldrehmoment konstant gehalten. Die 2-Tupel können beispielsweise so geändert werden, dass die Änderung des Verhältnisses zwischen Längsstromwert und Querstromwert eine Erhöhung des durch vektorielles Addieren des Längsstroms und des Querstroms erhaltenen Phasenstroms bei konstant gehaltenen Solldrehmoment umfasst.

Durch die Änderung des Verhältnisses zwischen Längsstromwert und Querstromwert kann eine Änderung der Schlupffrequenz erzielt werden, so dass bei der jeweiligen Läuferdrehzahl und dem vorgegebenen Solldrehmoment die Anregungsfrequenz der Asynchronmaschine nicht mehr mit dem kritischen Resonanzfrequenzwert zusammenfällt. Mit anderen Worten wird die Arbeitspunkttrajektorie unter gewissen Einbußen im Wirkungsgrad gezielt variiert, um die auf die Asynchronmaschine übertragenen Anregungsfrequenzen stets außerhalb des Bereichs der Eigenfrequenzen des elektrischen Antriebssystems zu halten.

Diese akustische Optimierung der Arbeitspunkttrajektorie muss nicht dauerhaft erfolgen, sondern kann nur kurzfristig im jeweiligen Drehzahlbereich der kritischen Resonanzfrequenzwerte aufrechterhalten werden, so dass der negative Einfluss auf den Wirkungsgrad der Asynchronmaschine im zeitlichen Mittel zu vernachlässigen ist.

Besonders hilfreich ist das Verfahren 20 im Grunddrehzahlbereich von elektrischen Antriebssystemen, in dem ausreichend Regelreserve bei der Variierung des Verhältnisses zwischen Längsstromwert und Querstromwert vorhanden ist. Im Grunddrehzahlbereich liegen aus akustischer Sicht allerdings auch die kritischsten Betriebspunkte, da bei höheren Drehzahlen Nebengeräusche anderer Systemkomponenten oder Fahrgeräusche bei Fahrzeugen die Geräusche der Asynchronmaschine meist überdecken. Mit dem vorliegenden Verfahren können für beispielhafte Asynchronmaschinen die Geräsuchpegel bei den kritischen Resonanzfrequenzwerten um bis zu 5 dB gesenkt werden.

Fig. 2 zeigt eine schematische Darstellung eines elektrischen Antriebssystems 10 mit einer Asynchronmaschine 1, die von einem Wechselrichter 3 mit einem n-phaisgen Drehstrom versorgt wird. Der Wechselrichter 3 seinerseits kann beispielsweise von einer durch einen Gleichspannungszwischenkreis 4 gestützten Gleichspannungsquelle 5, wie etwa einer Traktionsbatterie eines Fahrzeugs mit Energie versorgt werden.

Das elektrische Antriebssystems 10 weist eine Steuereinrichtung 2 auf, welche mit dem Wechselrichter 3 gekoppelt ist, und welche dazu ausgelegt ist, den Wechselrichter 3 gemäß dem Verfahren 20 wie im Zusammenhang mit Fig. 1 erläutert zum Betreiben der Asynchronmaschine 1 anzusteuern. Die Steuereinrichtung 2 ist in der schematischen Darstellung in Fig. 3 in größerem Detail gezeigt.

Die Steuereinrichtung 2 umfasst ein Drehzahlerfassungsmodul 6, welches mit einem Kontrollmodul 7 gekoppelt ist. Das Kontrollmodul 7 der Steuereinrichtung 2 ist wiederum mit einem Vergleichsmodul 8 gekoppelt, welches Zugriff auf einen Referenzwertspeicher 9 hat. Das Drehzahlerfassungsmodul 6 ist mit der Asynchronmaschine 1 gekoppelt und ist dazu ausgelegt, die aktuelle Läuferdrehzahl nr der Asynchronmaschine 1 zu erfassen.

Die aktuelle Läuferdrehzahl wird an das Kontrollmodul 7 weitergegeben, welches dazu ausgelegt ist, eine Arbeitspunkttrajektorie für die Asynchronmaschine 1 für eine Vielzahl von Solldrehmomenten der Asynchronmaschine 1 durch Berechnen von 2-Tupeln aus Längsstromwerten und Querstromwerten in einem synchron rotierenden Koordinatensystem der Asynchronmaschine 1 festzulegen. Für jedes der berechneten 2-Tupel aus Längsstromwerten und Querstromwerten berechnet das Kontrollmodul 7 dann eine Schlupffrequenz der Asynchronmaschine 1. Aus der Schlupffrequenz der Asynchronmaschine 1 kann das Kontrollmodul 7 eine Anregungsfrequenz der Asynchronmaschine 1 berechnen. Dies geschieht in dem Kontrollmodul 7 durch Summation der berechneten Schlupffrequenz und der mit der Polpaarzahl der Asynchronmaschine 1 gewichteten aktuellen Läuferdrehzahl nr. Die Arbeitspunkttrajektorie für die Asynchronmaschine 1 kann beispielsweise durch Minimieren des durch vektorielles Addieren des Längsstroms und des Querstroms erhaltenen Phasenstroms für jedes der Vielzahl von Solldrehmomenten der Asynchronmaschine 1 festgelegt werden.

Die festgelegte Arbeitspunkttrajektorie wird dann an das mit dem Kontrollmodul 7 gekoppelte Vergleichsmodul 8 abgegeben. Das Vergleichsmodul 8 ist dazu ausgelegt ist, die durch das Kontrollmodul 7 berechnete Anregungsfrequenz der Asynchronmaschine 1 mit mindestens einem vorbestimmten Resonanzfrequenzwert der Asynchronmaschine 1 zu vergleichen. Für diejenigen der 2-Tupel, bei denen die berechnete Anregungsfrequenz mit dem mindestens einen Resonanzfrequenzwert übereinstimmt, kann das Vergleichsmodul 8 dann die durch das Kontrollmodul 7 festgelegte Arbeitspunkttrajektorie korrigieren. Dies geschieht durch Änderung des Verhältnisses zwischen Längsstromwert und Querstromwert bei konstant gehaltenem Solldrehmoment.

Das Vergleichsmodul 8 kann die Resonanzfrequenzwerte beispielsweise aus dem Referenzwertspeicher 9 beziehen. In dem Referenzwertspeicher 9 können vorbestimmte Resonanzfrequenzwerte der Asynchronmaschine 1 gespeichert werden, beispielsweise eine Eigenfrequenz in einem an die Asynchronmaschine 1 angeschlossenen Getriebe, eine durch Luftspaltkräfte in der Asynchronmaschine 1 angeregte Resonanzfrequenz und/oder deren Harmonische. Diese Resonanzfrequenzwerte können beispielsweise durch Luftschallmessungen in verschiedenen Drehzahlbereichen vorab gemessen worden sein.

Die gegebenenfalls durch das Vergleichsmodul 8 korrigierte Arbeitspunkttrajektorie wird dann an das Kontrollmodul 7 zurück übermittelt, so dass das Kontrollmodul 7 den Wechselrichter 3 mit einem entsprechenden Steuersignal c ansteuern kann.

Die Steuereinrichtung 2 kann beispielsweise in einem elektrischen Antriebssystem 10 für Elektro- und Hybridfahrzeuge eingesetzt werden, die auf eine Asynchronmaschine 1 zurückgreifen und entsprechenden Anforderungen an maximale Lautstärkepegel in allen Drehzahlbereichen unterliegen.

**Patentansprüche**

1. Verfahren (20) zum Betreiben einer Asynchronmaschine (1), mit den Schritten:

   Festlegen (21) einer Arbeitspunkttrajektorie für die Asynchronmaschine (1) für eine Vielzahl von Solldrehmomenten der Asynchronmaschine (1) durch Berechnen von 2-Tupeln aus Längsstromwerten und Querstromwerten in einem synchron rotierenden Koordinatensystem der Asynchronmaschine (1);
   Berechnen (22) einer Schlupffrequenz der Asynchronmaschine (1) für jedes der berechneten 2-Tupel aus Längsstromwerten und Querstromwerten;
   Ermitteln (23) einer aktuellen Läuferdrehzahl der Asynchronmaschine (1); Berechnen (24) einer Anregungsfrequenz der Asynchronmaschine (1) durch Summation der berechneten Schlupffrequenz und der mit der Polpaarzahl der Asynchronmaschine (1) gewichteten aktuellen Läuferdrehzahl; **gekennzeichnet durch** Vergleichen (25) der berechneten Anregungsfrequenz der Asynchronmaschine (1) mit mindestens einem vorbestimmten Resonanzfrequenzwert der Asynchronmaschine (1); und Korrigieren (26) der festgelegten Arbeitspunkttrajektorie durch Änderung des Verhältnisses zwischen Längsstromwert und Querstromwert bei konstant gehaltenem Solldrehmoment für diejenigen der 2-Tupel, bei denen die berechnete Anregungsfrequenz mit dem mindestens einen Resonanzfrequenzwert übereinstimmt.

2. Verfahren (20) nach Anspruch 1, wobei das Festlegen (21) der Arbeitspunkttrajektorie umfasst: Minimieren des durch vektorielles Addieren des Längsstroms und des Querstroms erhaltenen Phasenstroms für jedes der Vielzahl von Solldrehmomenten der Asynchronmaschine (1).

3. Verfahren (20) nach einem der Ansprüche 1 und 2, wobei der mindestens eine vorbestimmte Resonanzfrequenzwert der Asynchronmaschine (1) eine Eigenfrequenz in einem an die Asynchronmaschine (1) angeschlossenen Getriebe, eine durch Luftspaltkräfte in der Asynchronmaschine (1) angeregte Resonanzfrequenz und/oder deren Harmonische umfasst.

4. Verfahren (20) nach Anspruch 3, wobei die vorbestimmten Resonanzfrequenzwerte der Asynchronmaschine (1) durch drehzahlabhängige Luftschallmessungen festgelegt werden.

5. Verfahren (20) nach einem der Ansprüche 1 bis 4, wobei die Änderung des Verhältnisses zwischen Längsstromwert und Querstromwert eine Erhöhung des durch vektorielles Addieren des Längsstroms und des Querstroms erhaltenen Phasenstroms bei konstant gehaltenen Solldrehmoment umfasst.

6. Steuereinrichtung (2) für eine Asynchronmaschine (1), mit:

   einem Kontrollmodul (7), welches dazu ausgelegt ist, eine Arbeitspunkttrajektorie für die Asynchronmaschine (1) für eine Vielzahl von Solldrehmomenten der Asynchronmaschine (1) durch Berechnen von 2-Tupeln aus Längsstromwerten und Querstromwerten in einem synchron rotierenden Koordinatensystem der Asynchronmaschine (1) festzulegen, eine Schlupffrequenz der Asynchronmaschine (1) für jedes der berechneten 2-Tupel aus Längsstromwerten und Querstromwerten zu berechnen, sowie eine Anregungsfrequenz der Asynchronmaschine (1) durch Summation der berechneten Schlupffrequenz und einer mit der Polpaarzahl der Asynchronmaschine (1) gewichteten aktuellen Läuferdrehzahl zu berechnen; **gekennzeichnet durch** ein Vergleichsmodul (8), welches mit dem Kontrollmodul (7) gekoppelt ist, und welches dazu ausgelegt ist, die durch das Kontrollmodul (7) berechnete Anregungsfrequenz der Asynchronmaschine (1) mit mindestens einem vorbestimmten Resonanzfrequenzwert der Asynchronmaschine (1) zu vergleichen, und die durch das Kontrollmodul (7) festgelegte Arbeitspunkttrajektorie durch Änderung des Verhältnisses zwischen Längsstromwert und Querstromwert bei konstant gehaltenem Solldrehmoment für diejenigen der 2-Tupel zu korrigieren, bei denen die berechnete Anregungsfrequenz mit dem mindestens einen Resonanzfrequenzwert übereinstimmt.

7. Steuereinrichtung (2) nach Anspruch 6, weiterhin mit:
einem Drehzahlerfassungsmodul (6), welches mit dem Kontrollmodul (7) gekoppelt ist, und welches dazu ausgelegt ist, die aktuelle Läuferdrehzahl der Asynchronmaschine (1) zu erfassen.

8. Steuereinrichtung (2) nach einem der Ansprüche 6 und 7, weiterhin mit:
einem Referenzwertspeicher (9), welcher mit dem Vergleichsmodul (8) gekoppelt ist, und welcher dazu ausgelegt ist, vorbestimmte Resonanzfrequenzwerte der Asynchronmaschine (1) zu speichern.

9. Steuereinrichtung (2) nach Anspruch 8, wobei die vorbestimmten Resonanzfrequenzwerte eine Eigenfrequenz in einem an die Asynchronmaschine (1) angeschlossenen Getriebe, eine durch Luftspaltkräfte in der Asynchronmaschine (1) angeregte Resonanzfrequenz und/oder deren Harmonische umfassen.

10. Steuereinrichtung (2) nach einem der Ansprüche 6 bis 9, wobei das Kontrollmodul (7) dazu ausgelegt ist, die Arbeitspunkttrajektorie für die Asynchronmaschine (1) durch Minimieren des durch vektorielles Addieren des Längsstroms und des Querstroms erhaltenen Phasenstroms für jedes der Vielzahl von Solldrehmomenten der Asynchronmaschine (1) festzulegen.

11. Elektrisches Antriebssystem (10), mit:

einer Asynchronmaschine (1);
einem Wechselrichter (3), welcher mit der Asynchronmaschine (1) gekoppelt ist und dazu ausgelegt ist, eine mehrphasige Stromversorgung für die Asynchronmaschine (1) bereitzustellen; und
einer Steuereinrichtung (2) gemäß einem der Ansprüche 6 bis 10, welche mit dem Wechselrichter (3) gekoppelt ist, und welche dazu ausgelegt ist, den Wechselrichter (3) gemäß dem Verfahren nach einem der Ansprüche 1 bis 5 zum Betreiben der Asynchronmaschine (1) anzusteuern.

**Claims**

1. Method (20) for operating an asynchronous machine (1), including the steps: determining (21) a working point trajectory for the asynchronous machine (1) for a plurality of desired torques of the asynchronous machine (1) by calculating 2-tuples from longitudinal current values and cross current values in a synchronously rotating coordinate system of the asynchronous machine (1);
calculating (22) a slip frequency of the asynchronous machine (1) for each of the 2-tuples calculated from longitudinal current values and cross current values;
determining (23) a present rotor speed of the asynchronous machine (1);
calculating (24) an excitation frequency of the asynchronous machine (1) by summation of the calculated slip frequency and the present rotor speed weighted with the number of pole pairs of the asynchronous machine (1); **characterized by**
comparing (25) the calculated excitation frequency of the asynchronous machine (1) with at least one predetermined resonance frequency value of the asynchronous machine (1); and
correcting (26) the determined working point trajectory by changing the ratio between longitudinal current value and cross current value at a constant desired torque for each of the 2-tuples for which the calculated excitation frequency corresponds to the at least one resonance frequency value.

2. Method (20) according to Claim 1, wherein the determination (21) of the working point trajectory includes:
minimizing the phase current, which is obtained by vector addition of the longitudinal current and the cross current, for each of the plurality of desired torques of the asynchronous machine (1).

3. Method (20) according to one of Claims 1 and 2, wherein the at least one predetermined resonance frequency value of the asynchronous machine (1) includes a characteristic frequency in a gearbox connected to the asynchronous machine (1), a resonance frequency excited by air-gap forces in the asynchronous machine (1), and/or the harmonic components thereof.

4. Method (20) according to Claim 3, wherein the predetermined resonance frequency values of the asynchronous machine (1) are determined by means of speed-dependent measurements of airborne noise.

5. Method (20) according to one of Claims 1 to 4, wherein the change in the ratio between longitudinal current value and cross current value includes an increase in the phase current, which is obtained by vector addition of the longitudinal current and the cross current, at a constant desired torque.

6. Control device (2) for an asynchronous machine (1), comprising:

a control module (7) which is designed for determining a working point trajectory for the asynchronous machine (1) for a plurality of desired torques of the asynchronous machine (1) by calculating 2-tuples from longitudinal current values and cross current values in a synchronously rotating coordinate system of the asynchronous machine (1), calculating a slip frequency of the asynchronous machine (1) for each of the 2-tuples calculated from longitudinal current values and cross current values, and calculating an excitation frequency of the asynchronous machine (1) by summation of the calculated slip frequency and a present rotor speed weighted with the number of pole pairs of the asynchronous machine (1); **characterized by** a comparison module (8) which is coupled to the control module (7) and which is designed for comparing the excitation frequency of the asynchronous machine (1) calculated by the control module (7) with at least one predetermined resonance frequency value of the asynchronous machine (1), and correcting the working point trajectory determined by the control module (7) by changing the ratio between longitudinal current value and cross current value at a constant desired torque for each of the 2-tuples for which the calculated excitation frequency corresponds to the at least one resonance frequency value.

7. Control device (2) according to Claim 6, further comprising:
a speed detection module (6) which is coupled to the control module (7) and which is designed for detecting the present rotor speed of the asynchronous machine (1).

8. Control device (2) according to one of Claims 6 and 7, further comprising:
a reference value memory (9) which is coupled to the comparison module (8) and which is designed for storing predetermined reference frequency values of the asynchronous machine (1).

9. Control device (2) according to Claim 8, wherein the predetermined resonance frequency values include a characteristic frequency in a gearbox connected to the asynchronous machine (1), a resonance frequency excited by air-gap forces in the asynchronous machine (1), and/or the harmonic components thereof.

10. Control device (2) according to one of Claims 6 to 9, wherein the control module (7) is designed for determining the working point trajectory for the asynchronous machine (1) by minimizing the phase current, which is obtained by vector addition of the longitudinal current and the cross current, for each of the plurality of desired torques of the asynchronous machine (1).

11. Electric drive system (10), comprising:

an asynchronous machine (1);
an inverter (3) which is coupled to the asynchronous machine (1) and is designed for providing a polyphase current supply for the asynchronous machine (1); and
a control device (2) according to one of Claims 6 to 10, which is coupled to the inverter (3) and which is designed for controlling the inverter (3) according to the method according to one of Claims 1 to 5 for operating the asynchronous machine (1).

**Revendications**

1. Procédé (20) de fonctionnement d'une machine asynchrone (1), comprenant les étapes suivantes :

définition (21) d'une trajectoire de point de fonctionnement pour la machine asynchrone (1) pour une pluralité de couples de consigne de la machine asynchrone (1) par calcul de doublets composés de valeurs de courant longitudinal et de valeurs de courant transversal dans un système de coordonnées tournant synchrone de la machine asynchrone (1) ;
calcul (22) d'une fréquence de glissement de la machine asynchrone (1) pour chacun des doublets calculés composés de valeurs de courant longitudinal et de valeurs de courant transversal ;
détermination (23) d'une vitesse de rotation de rotor actuelle de la machine asynchrone (1) ;
calcul (24) d'une fréquence d'excitation de la machine asynchrone (1) par addition de la fréquence de glissement calculée et de la vitesse de rotor actuelle pondérée avec le nombre de paires de pôles de la machine asynchrone (1) ;
**caractérisé par** la comparaison (25) de la fréquence d'excitation calculée de la machine asynchrone (1) avec au moins une valeur de fréquence de résonance prédéterminée de la machine asynchrone (1) ; et
correction (26) de la trajectoire du point de fonctionnement définie par modification du rapport entre la valeur de courant longitudinal et la valeur de courant transversal avec un couple de consigne maintenu constant pour le doublet avec lequel la fréquence d'excitation calculée coïncide avec ladite au moins une valeur de fréquence de résonance.

2. Procédé (20) selon la revendication 1, dans lequel la définition (21) de la trajectoire du point de fonctionnement comprend :
la minimisation du courant de phase obtenu par addition vectorielle du courant longitudinal et du courant transversal pour chacun de la pluralité de couples de consigne de la machine asynchrone (1).

3. Procédé (20) selon l'une des revendications 1 et 2, dans lequel ladite au moins une valeur de fréquence de résonance prédéterminée de la machine asynchrone (1) comprend une fréquence propre dans une transmission raccordée à la machine asynchrone (1), une fréquence de résonance excitée par des forces d'entrefer dans la machine asynchrone (1) et/ou leurs harmoniques.

4. Procédé (20) selon la revendication 3, dans lequel les valeurs de fréquence de résonance prédéterminées de la machine asynchrone (1) sont définies par des mesures de bruit de l'air qui dépendent de la vitesse de rotation.

5. Procédé (20) selon l'une des revendications 1 à 4, dans lequel la variation du rapport entre la valeur de courant longitudinal et la valeur de courant transversal comprend une augmentation du courant de phase obtenu par addition vectorielle du courant longitudinal et du courant transversal pour un couple de consigne maintenu constant.

6. Dispositif de commande (2) destiné à une machine asynchrone (1), comprenant :

un module de commande (7) qui est conçu pour définir une trajectoire de point de fonctionnement pour la machine asynchrone (1) pour une pluralité de couples de consigne de la machine asynchrone (1) par calcul de doublets composés de valeurs de courant longitudinal et de valeurs de courant transversal dans un système de coordonnées tournant synchrone de la machine asynchrone (1), pour calculer une fréquence de glissement de la machine asynchrone (1) pour chacun des doublets calculés composés de valeurs de courant longitudinal et de valeurs de valeurs de courant transversal, et pour calculer une fréquence d'excitation de la machine asynchrone (1) par addition de la fréquence de glissement calculée et de la vitesse de rotor actuelle pondérée avec le nombre de paires de pôles de la machine asynchrone (1) ;
**caractérisé par** un module de comparaison (8) qui est couplé au module de commande (7) et est conçu pour comparer la fréquence d'excitation de la machine asynchrone (1) calculée par le module de commande (7) avec au moins une valeur de fréquence de résonance prédéterminée de la machine asynchrone (1), et pour corriger la trajectoire du point de fonctionnement définie par le module de commande (7) par modification du rapport entre la valeur de courant longitudinal et la valeur de courant transversal avec un couple de consigne maintenu constant pour le doublet avec lequel la fréquence d'excitation calculée coïncide avec ladite au moins une valeur de fréquence de résonance.

7. Dispositif de commande (2) selon la revendication 6, comprenant en outre :
un module de détection de vitesse de rotation (6) qui est couplé au module de commande (7) et est conçu pour détecter la vitesse de rotor actuelle de la machine asynchrone (1).

8. Dispositif de commande (2) selon l'une des revendications 6 et 7, comprenant en outre :
une mémoire de valeurs de référence (9) qui est couplée au module de comparaison (8) et est conçue pour stocker des valeurs de fréquence de résonance prédéterminées de la machine asynchrone (1).

9. Dispositif de commande (2) selon la revendication 8, dans lequel les valeurs de fréquence de résonance prédéterminées comprennent une fréquence propre dans une transmission raccordée à la machine asynchrone (1), une fréquence de résonance excitée par des forces d'entrefer dans la machine asynchrone (1) et/ou leurs harmoniques.

10. Dispositif de commande (2) selon l'une des revendications 6 à 9, dans lequel le module de commande (7) est conçu pour déterminer la trajectoire du point de fonctionnement de la machine asynchrone (1) par minimisation du courant de phase obtenu par addition vectorielle du courant longitudinal et du courant transversal pour chacun de la pluralité de couples de consigne de la machine asynchrone (1).

11. Système d'entraînement électrique (10), comprenant :

une machine asynchrone (1) ;
un onduleur (3) qui est couplé à la machine asynchrone (1) et est conçu pour fournir une alimentation électrique polyphasée à la machine asynchrone (1) ; et
un dispositif de commande (2) selon l'une des revendications 6 à 10, qui est couplé à l'onduleur (3) et est conçu pour commander l'onduleur (3) conformément au procédé selon l'une des revendications 1 à 5 jusqu'à la mise en fonctionnement de la machine asynchrone (1).

## Fig. 1

20

21    22    23    24    25    26

## Fig. 2

10

5  4    3    1

c

2    nr

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 477124 A

**In der Beschreibung aufgeführte Nicht-Patentliteratur**

- Current Control of Induction Machines in the Field-Weakened Region. **GALLEGOS-LOPEZ G et al.** IEEE TRANSACTIONS ON INDUSTRY APPLICATIONS. IEEE SERVICE CENTER, vol. 43, 981-989